# EUROPÄISCHE PATENTANMELDUNG

(11) **EP 0 756 109 A2**
(43) Veröffentlichungstag der Anmeldung: **29.01.1997**
(21) Anmeldenummer: 96109813.4
(22) Anmeldetag: 19.06.1996
(51) Int. Cl.: F16H 45/02

(54) **Durchschalteinrichtung für eine hydrodynamische Strömungskupplung**

(30) Priorität: 26.07.1995 DE 19527292
(71) Anmelder: Tüschen & Zimmermann, 57368 Lennestadt-Saalhausen (DE)
(72) Erfinder: Tüschen, Alfred, 57368 Lennestadt-Saalhausen (DE)
(74) Vertreter: Simons, Johannes

(57) **Zusammenfassung**

Durchschalteinrichtung für hydrodynamische, eine Kraft- mit einer Arbeitsmaschine verkoppelnde Strömungskupplungen (1), insbesondere für Turbokupplungen, variabler oder konstanter Füllung, deren Antriebswelle (5) mittels der eine Kraftübertragungseinrichtung (11) aufweisenden Durchschalteinrichtung (D) mit ihrer Abtriebswelle (8) zur Erhöhung des Übertragungswirkungsgrades verkoppelbar sind. Die Kraftübertragungseinrichtung (11) der Durchschalteinrichtung ist (D) von der Drehbewegung der Strömungskupplung (1) entkoppelt und mittels einer außerhalb des Gehäuses (2) angeordneten Steuereinrichtung steuerbar und die Durchschalteinrichtung ist mittels eines Fluids steuerbar.

## Beschreibung

Die Erfindung betrifft eine Durchschalteinrichtung für hydrodynamische, eine Kraft- mit einer Arbeitsmaschine verkoppelnde Strömungskupplungen, insbesondere für Turbokupplungen, variabler oder konstanter Füllung, deren Antriebswelle mittels der Durchschalteinrichtung mit ihrer Abtriebswelle zur Erhöhung des Übertragungswirkungsgrades verkoppelbar sind. Solche Strömungskupplungen dienen zur Übertragung von Bewegungsenergie von einer Kraft- zu einer Arbeitsmaschine mittels eines in der Regel fließfähigen Betriebsmediums.

Strömungskupplungen der voranstehend genannten Art sind in großer Zahl bekannt. Gemeinsam ist diesen Kupplungen, daß sie jeweils mindestens ein mit der Antriebswelle verbundenes Pump enrad aufweisen, welches das Betriebsmedium umwälzt und auf diese Weise ein mit der Abtriebswelle verbundenes Turbinenrad antreibt. Der Vorteil einer derartigen Verkopplung von Antriebs- und Abtriebswelle besteht beispielsweise darin, daß eine Arbeitsmaschine stufenlos, abhängig von ihrer Drehrichtung und ohne Drehmomentwandlung vom Stillstand zur Betriebsdrehzahl angefahren werden kann. Darüber hinaus weisen hydrodynamische Kupplungen aufgrund der nicht starren Verbindung zwischen Antriebs- und Abtriebswelle auch bei wechselnden Belastungen eine große Elastizität auf.

Die nicht starre Verbindung zwischen Antriebs- und Abtriebswelle verursacht stets einen gewissen Verlust bei der Übertragung der Antriebsleistung. Aus diesem Grund ist vorgeschlagen worden, die Antriebs- und Abtriebswelle einer hydrodynamischen Kupplung nach Erreichen der Betriebsdrehzahl mittels einer Durchschalteinrichtung drehfest miteinander zu verbinden.

Von KFZ-Wandlern und Turbokupplungen mit konstanter Füllung sind Durchschalteinrichtungen in Form von Überbrückungskupplungen und Schaltkupplungen bekannt. Eine derartige Kupplung ist beispielsweise in DUBBEL, Taschenbuch für den Maschinenbau, 15. Auflage, 1983, S. 904ff beschrieben.

Gemeinsam ist allen bekannten Durchschalteinrichtungen, daß sie mit einem Kolben-Zylinder-Teil ausgerüstet sind, welches mit derselben Drehzahl rotiert wie eines der sich drehenden Teile der jeweiligen Kupplung. Bei diesem Teil handelt sich meist um das Primärteil der Strömungskupplung. Gleichzeitig wird bei den bekannten mit einer Durchschalteinrichtung ausgestatteten Strömungskupplungen die Durchschalteinrichtung mit der selben Druckflüssigkeit betätigt, mit der auch die Strömungskupplung selbst arbeitet.

Die Aufgabe der Erfindung besteht darin, eine Durchschalteinrichtung für eine Strömungskupplung der eingangs genannten Art zu schaffen, die unabhängig vom jeweiligen Betriebszustand der Kupplung betätigt werden kann.

Die voranstehend genannte Aufgabe wird erfindungsgemäß dadurch gelöst, daß die Kraftübertragungseinrichtung der Durchschalteinrichtung von der Drehbewegung der Strömungskupplung entkoppelt und mittels einer außerhalb des Gehäuses angeordneten Steuereinrichtung steuerbar ist und daß die Durchschalteinrichtung mittels eines Fluids steuerbar ist.

Gemäß der Erfindung wird das den bekannten Strömungskupplungen gemeinsame Prinzip der automatischen Überbrückung der Strömungskupplung zu Gunsten einer außerhalb der Strömungskupplung angeordneten und unabhängig vom Betriebszustand der Strömungskupplung arbeitenden Durchschalteneinrichtung und Steuerungseinrichtung aufgegeben. Dies ermöglicht es beispielsweise, schon dann eine drehfeste Verbindung zwischen Antriebs- und Abtriebswelle herzustellen, wenn die geforderte Betriebsdrehzahl zwar noch nicht erreicht, Drehzahl- oder Belastungsschwankungen jedoch nicht mehr zu erwarten sind. Genauso ist es möglich, die große Elastizität der Strömungskupplung auch dann noch aufrechtzuerhalten, wenn die Betriebsdrehzahl erreicht ist. Dabei stellt die durch ein Fluid erfolgende Steuerung der Durchschalteinrichtung sicher, daß die zum Überbrücken der Turbokupplung benötigten Kräfte sicher und genau aufgebracht werden.

Kostengünstig verwirklichen läßt sich die Erfindung dadurch, daß die Durchschalteinrichtung eine von der Drehung der Antriebs- und Abtriebswelle entkoppelte Kraftübertragungseinrichtung, eine Durchschaltkupplung und eine Belastungszange umfaßt. Die Kraftübertragungseinrichtung übt in diesem Fall über die Belastungszange eine Betätigungskraft auf die Durchschaltkupplung aus, wobei die Belastungszange die Kraftübertragungseinrichtung und die Durchschaltkupplung zangenförmig derart umgreift, daß bei wirksamer Durchschalteinrichtung keine axialen Kräfte auf die Elemente der Strömungskupplung ausgeübt werden.

Bei einer derartigen Ausgestaltung der Erfindung ist die Kraftübertragungseinrichtung als Teil der Durchschalteinrichtung drehfest angeordnet. Dies bringt eine einfache Herstellbarkeit und eine hohe Wartungsfreundlichkeit mit sich. Darüber hinaus ist es möglich, mit einer derart ausgestalteten Durchschalteinrichtung große Betätigungskräfte auszuüben, welche die sichere Übertragung hoher Drehmomente gewährleisten. Letzteres gilt insbesondere dann, wenn die Kraftübertragungseinrichtung als Kolben-Zylinder-Einheit ausgebildet ist. Eine leicht herstellbare derartige Kolben-Zylinder-Einheit ist erfindungsgemäß dadurch gekennzeichnet, daß der Zylinder der Kolben-Zylinder-Einheit als Zylindernut und der Kolben der Kolben-Zylinder-Einheit als Ringkolben ausgebildet ist und daß die Kolben-Zylinder-Einheit koaxial zu der An- oder Abtriebswelle angeordnet ist. Auf diese Weise können zur hydraulischen Steuerung der Durchschalteinrichtung andere Fluide eingesetzt werden, als für die Kraftübertragung zwischen Antriebs- und Abtriebswelle.

Günstig ist es auch, wenn die in der Durchschalteinrichtung eingesetzte Durchschaltkupplung als Reibkupplung, insbesondere als Lamellenkupplung, ausgebildet ist. Bei Verwendung derartiger Kupplungen zur Überbrückung der Strömungskupplung ist es leicht möglich, die Durchschalteinrichtung in ausreichender Weise entsprechend den an sie gestellten Anforderungen zu dimensionieren.

Die Verwendung von Reibkupplungen ist insbesondere dann vorteilhaft, wenn die Kraftübertragungseinrichtung auf ihrer der Durchschaltkupplung abgewandten Seite auf die koaxial zu der An- oder Antriebswelle angeordnete und koaxial zu dieser verschiebbare Belastungszange einwirkt, welche auf die von der Kraftübertragungseinrichtung abgewandte Seite der Durchschaltkupplung drückt. Die Belastungszange ist somit zangenförmig aufgebaut. Wenn zusätzlich der Zylinderkörper der Kraftübertragungseinrichtung axial verschiebbar im Gehäuse der Durchschalteinrichtung angeordnet ist, kann insbesondere bei Verwendung von Lamellenkupplungen die Reibflächenzahl problemlos an das zu übertragende Drehmoment angepaßt werden.

In vielen Anwendungsfällen wird es günstig sein, wenn die Steuereinrichtung die Durchschalteinrichtung in Abhängigkeit von Drehzahlen verschiedener, hinsichtlich der Drehzahl zu synchronisierender Abtriebs- oder Antriebswellen steuert.

Wie erwähnt ist die Durchschalteinrichtung stets unabhängig vom Betriebszustand der Turbokupplung betätigbar. Auf diese Weise ist es möglich, die besonderen Eigenschaften der Turbokupplung, wie deren Elastizität oder die Einstellbarkeit ihres Kraftübertragungsverhaltens, in jeder Betriebssituation auszunutzen. Hierdurch ist es auf einfache Weise möglich, die Drehzahl einzelner Wellen, die gemeinsam eine Arbeitsmaschine, beispielsweise ein Förderband oder eine Strebförderkette, antreiben, miteinander zu synchronisieren.

Nachfolgend wird die Erfindung anhand von einer ein Ausführungsbeispiel darstellenden Zeichnung näher erläutert. Es zeigen:
- Fig. 1,: eine Durchschaltenrichtung mit einer Strömungskupplung im Längsschnitt;

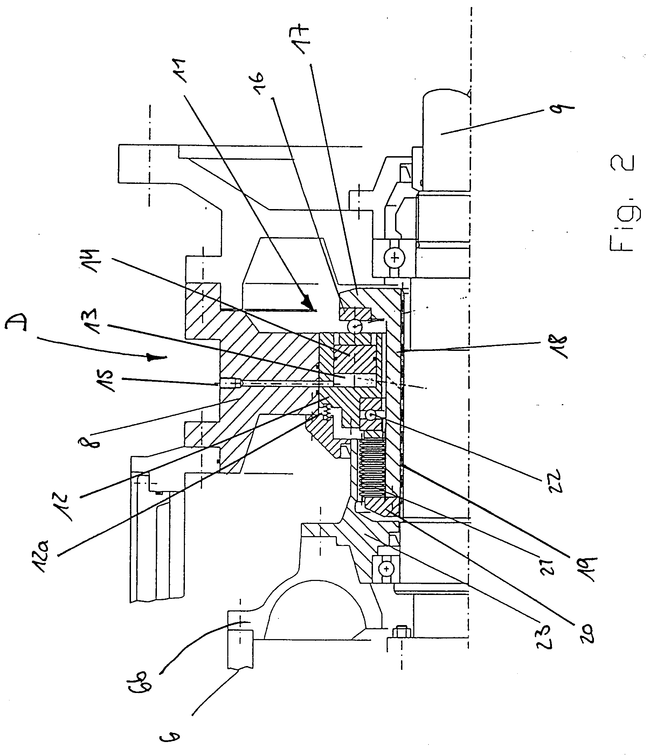

- Fig. 2,: einen Ausschnitt A der Fig. 1 in vergrößerter Ansicht.

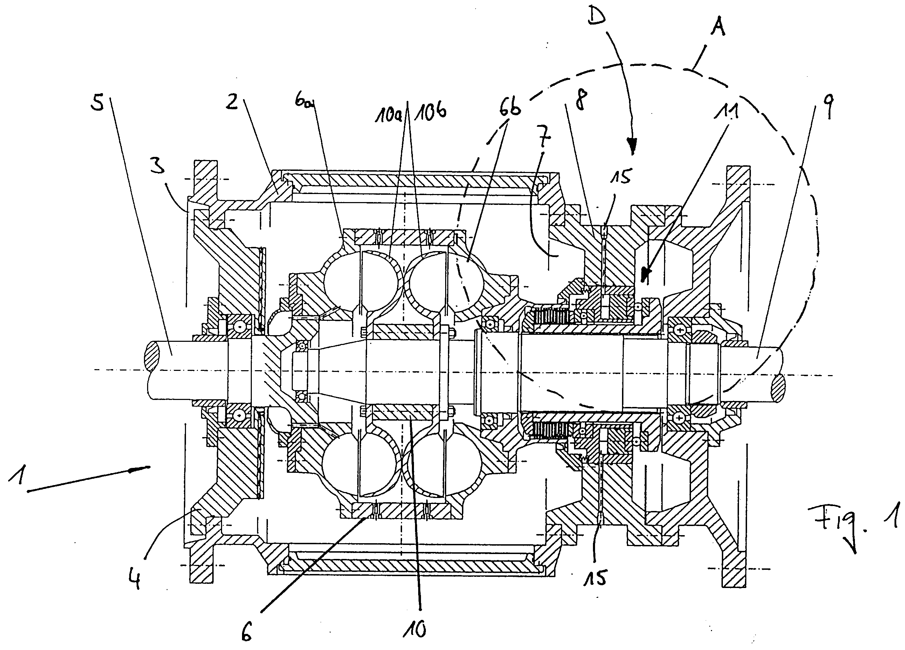

Die in Fig. 1 gezeigte Strömungskupplung 1 weist ein Kupplungsgehäuse 2 auf, in dessen eine Kupplungsflanschöffnung 3 ein Antriebsflansch 4 eingesetzt ist. Durch eine mittig angeordnete Öffnung des Antriebsflansch 4 ist eine Antriebswelle 5 in das Gehäuse 2 geführt.

Die Antriebswelle 5 ist drehfest mit der ersten Hälfte 6a eines Pumpenrades 6 verbunden. Die zweite Hälfte 6b des Pumpenrades 6 ist spiegelsymetrisch zu der ersten Hälfte 6a ausgebildet und drehfest mit dieser verbunden.

In die zweiten Kupplungsflanschöffnung 7 des Kupplungsgehäuses 2 ist der Flansch 8 einer Durchschalteinrichtung D eingesetzt.

Durch diesen Flansch 8 der Durchschalteinrichtung D ist eine Abtriebswelle 9 aus dem Kupplungsgehäuse 2 geführt. Die Abtriebswelle 9 ist im Inneren des Gehäuses 2 mit einem Turbinenrad 10 drehfest verbunden, dessen beiden Hälften 10a,b jeweils einer der Hälften 6a,b des Pumpenrades 6 zugeordnet sind.

Koaxial zur Abtriebswelle 9 angeordnet ist eine als Kolben-Zylinder-Einheit ausgebildete Kraftübertragungseinrichtung 11. Die Kraftübertragungseinrichtung 11 ist wie der Flansch 8 Teil der Durchschalteinrichtung D. Gesteuert wird die Durchschalteinrichtung D durch eine nicht gezeigte, außerhalb des Kupplungsgehäuses 2 angeordnete Steuereinrichtung.

Die Kraftübertragungseinrichtung 11 weist einen ringförmigen Zylinderkörper 12 auf, welcher in der Durchgangsöffnung des Flansches 8 mittels einer Verstellvorrichtung 12a koaxial zur Abtriebswelle 9 verschiebbar ist. In den Zylinderkörper 12 ist eine ringförmig umlaufende Zylindernut 13 eingeformt, in der ein Ringkolben 14 verschiebbar eingesetzt ist. Die Zylindernut 13 ist über Steuerleitungen 15 an die nicht gezeigte Steuereinrichtung angeschlossen.

Der Ringkolben 14 ist über ein erstes Axiallager 16 an einer ersten, radial nach außen gerichteten Zangenschulter 17 abgestützt, die am Ende einer nach Art einer Hülse ausgebildeten, koaxial zu der Abtriebswelle 9 angeordneten und koaxial zu dieser verschiebbaren Belastungszange 18 ausgebildet ist. Über ein Vielzahnprofil 19 ist die Belastungszange 18 drehfest mit der Abtriebswelle 9 verbunden.

Am anderen, dem Inneren des Gehäuses 2 zugeordnete Ende der Belastungszange 18 ist eine zweite ebenfalls radial nach außen gerichtete Zangenschulter 20 ausgebildet, die auf das dem Innern des Kupplungsgehäuses 2 zugeordnete Ende einer zwischen der Zangenschulter 20 und dem Zylinderkörper 12 angeordneten, als Lamellenkupplung ausgebildete Durchschaltkupplung 21 einwirkt.

Die Durchschaltkupplung 21 ist mit ihrem anderen Ende über ein zweites Axiallager 22 an dem Zylinderkörper 12 abgestützt. Die Innenlamellen der Durchschaltkupplung 21 sind mit der Belastungszange 18 drehfest verbunden, während die Außenlamellen der Durchschaltkupplung 21 drehfest mit einer an die zweite Hälfte 6b des Pumpenrades 6 angeformte Pumpenradlagerschale 23 verbunden sind.

Die voranstehend erläuterte Strömungskupplung 1 arbeitet wie folgt:

Über das mit der Antriebswelle 5 verbundene Pumpenrad 6 wird das von einer nicht gezeigten Kraftmaschine erzeugte Drehmoment in Strömungsenergie des in dem Gehäuse 2 enthaltenen Betriebsmediums, beispielsweise Wasser, umgewandelt. Diese Strömungsenergie des Betriebsmediums wird über das Turbinenrad 10 in mechanische Energie zurückgewandelt. Dabei überträgt die Strömungskupplung 1 die über die Antriebswelle 5 eingeleitete Energie bei wirkungsloser Durchschaltkupplung 21 mit einem typischen Wirkungsgrad von 0,95 bis 0,97 auf die Abtriebswelle 9.

Zum Betätigen der Durchschalteinrichtung D wird von der nicht gezeigten Steuereinrichtung ein Fluid, beispielsweise Hydraulik-Öl, über die Steuerleitungen 15 in die Zylindernut 13 gefüllt. Die damit einhergehende Druckerhöhung innerhalb der Zylindernut 13 bewirkt ein Ausrücken des Ringkolbens 14 aus der Zylindernut 13. Durch dieses Ausrücken des Ringkolbens 14 wird die Betätigungszange 18 auf der Abtriebswelle 9 und koaxial zu dieser in Ausrückrichtung des Ringkolbens 14 verschoben. Durch diese Verschiebung werden die Lamellen der Durchschaltkupplung 21 zwischen der zweiten Zangenschulter 20 und dem zweiten Axiallager 22 eingespannt. Sobald auf diese Weise eine ausreichende Kupplungskraft auf die Durchschaltkupplung 21 ausgeübt wird, ist die Antriebswelle 5 über das Pumpenrad 6, die Durchschaltkupplung 21, die Belastungszange 18 und die Längsverzahnung 19 drehfest mit der Abtriebswelle 9 verbunden. Dabei werden dadurch, daß die Belastungszange 18 die Kraftübertragungseinrichtung 11 und die Durchschaltkupplung 21 zangenartig umgreift, keine axialen Kräfte auf die Elemente der Strömungskupplung 1 ausgeübt.

Bei Verminderung des Drucks in der Zylindernut 13 wird die Durchschaltkupplung 21 entlastet, so daß die drehfeste Verbindung zwischen der Antriebs- 5 und der Abtriebswelle 9 wieder gelöst wird.

Die externe Ansteuerbarkeit der Kraftübertragungseinrichtung 11 ermöglicht es, auch nach Erreichen der Betriebsdrehzahl die Durchschaltkupplung 21 außer Funktion zu setzen, um die Elastizität der Strömungskupplung 1 beispielsweise zum Synchronisieren verschiedener gemeinsam eine Arbeitsmaschine antreibender Wellen zu nutzen.

## Patentansprüche

1. Durchschalteinrichtung für hydrodynamische, eine Kraft- mit einer Arbeitsmaschine verkoppelnde Strömungskupplungen (1), insbesondere für Turbokupplungen, variabler oder konstanter Füllung, deren Antriebswelle (5) mittels der eine Kraftübertragungseinrichtung (11) aufweisenden Durchschalteinrichtung (D) mit ihrer Abtriebswelle (8) zur Erhöhung des Übertragungswirkungsgrades verkoppelbar sind, **dadurch gekennzeichnet**, **daß** die Kraftübertragungseinrichtung (11) der Durchschalteinrichtung (D) von der Drehbewegung der Strömungskupplung (1) entkoppelt und mittels einer außerhalb des Gehäuses (2) angeordneten Steuereinrichtung steuerbar ist und daß die Durchschalteinrichtung mittels eines Fluids steuerbar ist.

2. Strömungskupplung nach Anspruch 1, **dadurch gekennzeichnet**, **daß** die Durchschalteinrichtung (D) eine Durchschaltkupplung (21) und eine Belastungszange (18) umfaßt, und daß die Belastungszange (18) die Durchschaltkupplung (21) und die Kraftübertragungseinrichtung (11) zangenförmig derart umfaßt, daß bei wirksamer Durchschalteinrichtung (D) keine Kräfte in axialer Richtung auf die Elemente der Strömungskupplung (1) wirken.

3. Strömungskupplung nach Anspruch 1 oder 2, **dadurch gekennzeichnet**, **daß** die Kraftübertragungseinrichtung (11) als Kolben-Zylinder-Einheit ausgebildet ist.

4. Strömungskupplung nach Anspruch 3, **dadurch gekennzeichnet**, **daß** der Zylinder der Kraftübertragungseinrichtung (11) als Zylindernut (13) und der Kolben der Kraftübertragungseinrichtung (11) als Ringkolben (14) ausgebildet ist und daß die Kraftübertragungseinrichtung (11) koaxial zu der An- oder Abtriebswelle (5,8) angeordnet ist.

5. Strömungskupplung nach einem der Ansprüche 1 bis 4, **dadurch gekennzeichnet**, **daß** die Durchschaltkupplung (21) als Reibkupplung, insbesondere als Lamellenkupplung, ausgebildet ist.

6. Strömungskupplung nach einem der voranstehenden Ansprüche, **dadurch gekennzeichnet**, **daß** die Steuereinrichtung die Durchschalteinrichtung (D) in Abhängigkeit von Drehzahlen verschiedener, hinsichtlich der Drehzahl zu synchronisierender Abtriebs- oder Antriebswellen steuert.

7. Strömungskupplung nach einem der voranstehenden Ansprüche, **dadurch gekennzeichnet**, **daß** das Fluid, über welches die Durchschalteinrichtung steuerbar ist, sich von dem Betriebsmedium der Strömungskupplung unterscheidet.
